# EUROPEAN PATENT SPECIFICATION

(11) **EP 2 937 608 B1**
(45) Date of publication and mention of the grant of the patent: **05.06.2019**
(21) Application number: 14773584.9
(22) Date of filing: 21.02.2014
(51) Int. Cl.: F16K 31/06

(54) **LINEAR BIDIRECTIONAL ELECTROMAGNETIC VALVE**
LINEARES BIDIREKTIONALES ELEKTROMAGNETISCHES VENTIL
ÉLECTROVANNE LINÉAIRE BIDIRECTIONNELLE

(30) Priority: 28.03.2013 CN 201310106816; 28.03.2013 CN 201310106710; 28.03.2013 CN 201310106726
(43) Date of publication of application: 28.10.2015
(73) Proprietor: Zhejiang Sanhua Climate & Appliance Controls Group Co., Ltd., Shaoxing, Zhejiang 312500 (CN)
(72) Inventor: WANG, Yudong, Xinchang County Zhejiang 312500 (CN); YAN, Weilin, Xinchang County Zhejiang 312500 (CN); CHEN, Bin, Xinchang County Zhejiang 312500 (CN)
(74) Representative: Maikowski & Ninnemann Patentanwälte Partnerschaft mbB
(86) International application number: PCT/CN2014/072351
(87) International publication number: WO 2014/154070

(56) References cited:
- CN-A- 102 032 382
- CN-A- 102 691 820
- CN-Y- 2 619 098
- CN-Y- 2 675 970
- JP-A- H06 101 780
- JP-A- 2005 055 034
- JP-U- H 058 153
- US-A- 2 470 470
- US-A- 5 072 752
- US-A1- 2004 195 532
- US-A1- 2007 290 151
- US-A1- 2007 290 153
- US-A1- 2010 155 633
- US-B1- 6 328 275

## Description

This application claims the benefit of priorities to Chinese Patent Applications No. 201310106816.8, No. 201310106710.8, and No. 201310106726.9, all titled "LINEAR TWO-WAY SOLENOID VALVE" and filed with the Chinese State Intellectual Property Office on March 28, 2013.

### TECHNICAL FIELD

The present application relates to the technical field of valve body, and particularly to a linear two-way solenoid valve.

### BACKGROUND

Common solenoid valves can only realize shut off and unidirectional communication due to the limit of structure, and in the conventional system, the solenoid valves are required to be used cooperatively with one-way valves. In a heat pump system, the flow directions of the refrigerant in the cooling process and the heating process are opposite, thus two one-way solenoid valves are installed in series to realize the two-way communication, which results in a complicated structure of the system, a low reliability, and a high cost. In view of this, it is required to design a two-way solenoid valve.
In US 2007/290153 A1, a force feedback poppet valve 10, which includes a valve body 12 having a main chamber 14, a main poppet 20 slidably disposed within the main chamber 14, and a pilot valve 80 having a pilot poppet 82 slidably disposed in a bore 84 defined within the pilot valve 80. The main chamber 14 may include a first port 16 at a side wall of the main chamber 14 and a second port 18 at a bottom of the main chamber 14. The main poppet 20 may include an upper surface 28, which forms a control chamber 30 with inner walls of the main chamber 14. The pilot poppet 82 may include a valve seating portion 86 at a lower end of the pilot poppet 82, a valve seat 88 may be formed at a lower end of the bore 84 for receiving the valve seating portion 86 of pilot poppet 82, and the valve seating portion 86 may be adapted to sealingly engage the valve seat 88. When the electrical current in a coil 122 of the actuator 120 increases, an armature 124 applies a control force Fcp to move the pilot poppet 82 toward the main poppet 20 to open the pilot poppet 82 and subsequently to allow the fluid to flow from the control chamber 30 to an annular chamber 110 through a meter-out orifice 111. Then, the fluid may flow from the annular chamber 110 to the first port 16 or the second port 18 whichever has a lower pressure. JP H05 8153 U shows a linear two-way solenoid valve.

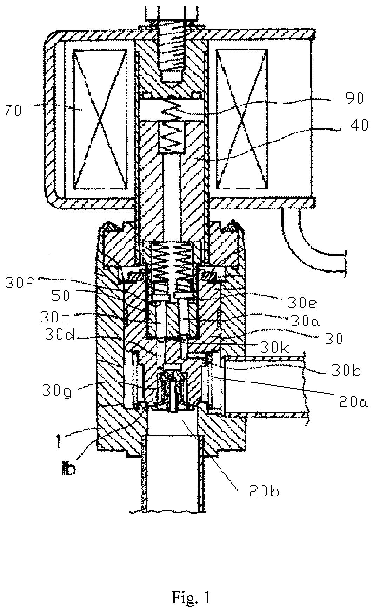

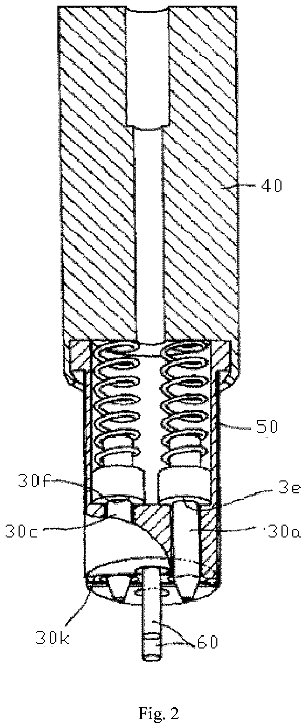

Reference is made to Figures 1 to 2. Figure 1 is a schematic view showing the structure of a typical two-way solenoid valve, and Figure 2 is a schematic view showing the structure of a pilot valve head and a movable iron core of the two-way solenoid valve in Figure 1.

The two-way solenoid valve is a linear solenoid valve, and includes a main valve body 1 and a pilot valve body which are arranged in an up and down direction. A coil 70, a static iron core and a movable iron core 40 cooperating with each other, and a pilot valve head 50 fixed to the movable iron core 40 are provided inside the pilot valve body. A piston 30 is provided inside a valve chamber of the main valve body 1, and a piston chamber is formed above the piston 30 after the piston 30 is mounted. The main valve body 1 is further provided with a first connecting port 20a and a second connecting port 20b, which are respectively connected to a first connecting pipe and a second connecting pipe. As shown in Figure 1, when moving up, the piston 30 leaves a valve port 1b, thereby making the first connecting port 20a to be in communication with the second connecting port 20b. The pilot valve head 50 and the movable iron core 40 are connected as a whole, thus when the coil 70 of the two-way solenoid valve is energized, under the action of magnetic force, the movable iron core 40 drives the pilot valve head 50 to move up to leave the piston 30; and when the coil 70 is de-energized, a spring 90 is reset, and the movable iron core 40 pushes the pilot valve head 50 to move downward to abut tightly against the piston 30, to close the valve port 1b.

A first piston flow channel 30k and a second piston flow channel 30d are provided in the piston 30, the first piston flow channel 30k is in communication with the first connecting port 20a through an inflow channel 30b arranged in the piston 30, and the second piston flow channel 30d is in communication with the second connecting port 20b through a one-way valve 30g. A first check valve 30e and a second check valve 30f are provided on the pilot valve head 50, and as shown in Figure 1, a first check valve core 30a and a second check valve core 30c are inserted into holes of the pilot valve head 50, to directly block off the first piston flow channel 30k and the second piston flow channel 30d respectively. The operating principle of the two-way solenoid valve is described as follows.
a. In the case that refrigerant enters via the first connecting port 20a:
   when the coil 70 is de-energized:
      The pilot valve head 50 is at the position shown in Figure 1, and at this moment, under the action of the spring 90, the pilot valve head 50 presses the piston 30 tightly against the valve port 1b, and the first connecting port 20a cannot be in direct communication with the second connecting port 20b. The path of the refrigerant in this case is that, the refrigerant enters from the first connecting port 20a, and flows through the inflow channel 30b and the first piston flow channel 30k, and pushes open the first check valve 30e, and finally flows into the piston chamber above the piston 30. At this moment, under the action of the high-pressure refrigerant, the second check valve 30f is shut off, and the refrigerant cannot pass through the second piston flow channel 30d to flow to the second connecting port 2b. Thus, the first connecting port 20a and the second connecting port 20b are disconnected, and the two-way solenoid valve is closed.
   when the coil 70 is energized:
      The coil 70 generates a magnetic field, the movable iron core 40 pulls the pilot valve head 50 to move close to the static iron core, and the first check valve 30e and the second check valve 30f are disengaged from the first piston flow channel 30k and the second piston flow channel 30d respectively. At this moment, the path of the refrigerant is that, the refrigerant enters from the first connecting port 20a, flows through the inflow channel 30b, the first piston flow channel 30k and the second piston flow channel 30d, and then pushes open the one-way valve 30g, and finally flows to the second connecting port 20b. Since a sectional area of the inflow channel 30b is smaller than a sectional area of the second piston flow channel 30d, the volume of the refrigerant flowing into the piston chamber above the piston 30 is less than the volume of the refrigerant flowing out the same, which reduces the pressure of the refrigerant above the piston 30. Accordingly, under the action of pressure difference formed between the upper side and the lower side of the piston 30, the piston 30 moves upward to be disengaged from the valve port 1b, thus the first connecting port 20a is in direct communication with the second connecting port 20b, and the two-way solenoid valve is opened.
b. In the case that the refrigerant enters via the second connecting port 20b:
   when the coil 70 is de-energized:
      The path of the refrigerant in this case is that, the refrigerant enters from the second connecting port 20b, and flows through an inlet pore in the one-way valve 30g and the second piston flow channel 30d, and then pushes open the second check valve 30f, and finally flows into the piston chamber above the piston 30. At this moment, under the action of the high-pressure refrigerant, the first check valve 30e is shut off, and the refrigerant cannot flow through the first piston flow channel 30k to the first connecting port 2a. Thus the first connecting port 20a and the second connecting port 20b are disconnected, and the two-way solenoid valve is closed.
   when the coil 70 is energized:
      As described hereinabove, the pilot valve head 50 moves upward, and the path of the refrigerant is that, the refrigerant enters from the second connecting port 20b, flows through the inlet pore of the one-way valve 30g, the second piston flow channel 30d, the first piston flow channel 30k and the inflow channel 30b, and finally flows to the first connecting port 20a. Since the sectional area of the inlet pore is smaller than the sectional area of the inflow channel 30b, the volume of the refrigerant flowing into the space above the piston 30 is small, and the volume of the refrigerant flowing out the space is large, which reduces the pressure of the refrigerant above the piston 30. Accordingly, under the action of the pressure difference formed between the upper side and the lower side of the piston 30, the piston 30 moves upwards to be disengaged from the valve port 1b, the first connecting port 20a is in direct communication with the second connecting port 20b, and the two-way solenoid valve is opened.

Based on the operating principle of the two-way solenoid valve, in design, the sectional areas of the inflow channel 30b (via which the refrigerant flows in and out), two piston flow channels, a channel where the one-way valve 30g is located (which allows the refrigerant to flow out), and the inlet pore of the one-way valve 30g (which allows the refrigerant to enter) are required to satisfy certain relationships to make sure that the pressure difference may be formed. In practice, as shown in Figure 1, the first piston flow channel 30k allowing the refrigerant to flow out and the inflow channel 30b allowing the refrigerant to flow in are in the same flow channel, and the second piston flow channel 30d allowing the refrigerant to flow out and the inlet pore of the one-way valve 30g allowing the refrigerant to flow in are also in the same flow channel.

The above two-way solenoid valve has the following technical defects.

Firstly, when the solenoid valve requires a large flow rate, the valve port 1b is enlarged, and accordingly, the stroke of the piston 30 needs to be increased, thus the travel of the pilot valve head 50 needs to be increased at the same time, and accordingly, the travel of the movable iron core 40 also needs to be increased. With the increasing of the travel of the movable iron core 40, an attraction force provided by the core 70 is decreased, and the valve opening capacity of the valve body 1 is reduced sharply. In addition, the height of the solenoid valve may also be increased; and if the coil 70 is enlarged, a series of problems will be caused, such as a large power, a high temperature increase and etc., and the volume of the solenoid valve may also be increased.

Secondly, in the two-way opening and closing process of the solenoid valve, the first check valve core 30a and the second check valve core 30c must be always directed at the first piston flow channel 30k and the second piston channel 30d respectively, and cannot move radially; otherwise, sealing functions of the two check valve cores fail, which results in that the two-way solenoid valve cannot be opened or closed normally. In order to avoid this problem, two guide rods 60 are arranged on the pilot valve head 50, and the piston 30 is provided with guide holes at corresponding positions. Referring to Figure 2, it can be understood that, the guide rods 60 can be always inserted into the guide holes, to ensure that the valve cores of the check valves are always directed at the respective piston flow channel. With the above arrangement, the pilot valve head 50 has a complicated structure, a high machining difficulty, and a high assembling technology cost, and even with this complicated structure, the control accuracy is still not very ideal.

In view of this, a technical issue urgently to be solved by those skilled in the art is to satisfy the large flow rate requirement of the two-way solenoid valve on the premise of not affecting the valve opening capacity of the solenoid valve and not changing the size of the coil.

### SUMMARY

To address the above technical issues, an object of the present application is to provide a linear two-way solenoid valve, which allows the stroke of a piston to be separated from the travel of a pilot valve head, to satisfy the requirement for a large flow rate on the premise of not affecting the valve opening capacity of the solenoid valve and not changing a size of a coil.

A linear two-way solenoid valve according to the present application includes a main valve body and a pilot valve body, a coil, and a static iron core and a movable iron core cooperating with each other are provided in the pilot valve body; a piston is provided in a valve chamber formed by the main valve body to form a piston chamber, and the main valve body is provided with a first connecting port and a second connecting port, connection and disconnection between the first connecting port and the second connecting port are controlled by the piston; the linear two-way solenoid valve further includes a first flow channel and a second flow channel, which are respectively in communication with the first connecting port and the second connecting port to allow refrigerant to flow out, wherein,
the main valve body is internally provided with a pilot valve flow channel, and the piston chamber is remained in communication with a pilot valve chamber formed between the pilot valve body and the main valve body via the pilot valve flow channel; and
a pilot valve head of the pilot valve body is configured to move, to open or close the pilot valve port internally provided in the main valve body to connect or disconnect the piston chamber with the first flow channel or the second flow channel,
wherein an inflow channel in communication with the first connecting port is arranged on a side wall of the piston; an inflow channel in communication with the second connecting port is arranged on an end portion of the piston; and an inlet one-way valve configured to unidirectionally connect the second connecting port with the piston chamber (4) is arranged in the inflow channel in communication with the second connecting port, characterized in that the first flow channel and the second flow channel are both wholly internally arranged in the main valve body; and in that an inlet balance hole is further provided on the piston to connect the piston chamber with the first connecting port.

The first flow channel and the second flow channel, which allow the piston valve to be in communication with the first connecting port and the second connecting port when the solenoid valve is opened, are internally provided in the main valve body, and accordingly, the pilot valve head only needs to cooperate with the main valve body, and no longer cooperates with the piston, thus the stroke of the piston is separated from the travel of the pilot valve head. Therefore, the solenoid valve has the following beneficial effects.

Firstly, when the solenoid valve has a demand for a large flow rate, the valve port is enlarged, the stroke of the piston is increased, while the travels of the movable iron core and the pilot valve head are not required to be increased, therefore the valve opening capacity of the valve is not affected, and the height of the solenoid valve is also not required to be increased. Based on this, the coil is also not required to be enlarged, thereby overcoming the technical defects in the technical solutions in the background technology.

Moreover, since the pilot valve head is separated from the piston, a chamber in Figure 1 is not required to be provided between the pilot valve head and the movable iron core, and a spring located inside the chamber is also not required, thus the pilot valve head have a simple structure.

Secondly, the pilot valve head and the main valve body cooperate with each other, and the main valve body is a fixed component, which has a stable state, therefore during a two-way opening and closing process of the solenoid valve, a dislocation between the pilot valve head and the main valve body is not apt to occur, and compared with the background technology, the closing performance of the pilot valve port is not apt to be affected by the dislocation. Therefore, it is not required to provide a guiding part with a complicated structure on the main valve body and the pilot valve head, and compared with the background technology, obviously in the present application, the structure is simplified, the machining difficulty and the assembly technology cost are reduced, and the control accuracy may satisfy the requirement.

Preferably, the number of the pilot valve port of the linear two-way solenoid valve is one; and one-way valves are provided respectively in the first flow channel and the second flow channel to respectively connect the pilot valve port to the first connecting port and connect the pilot valve port to the second connecting port.

The connection and disconnection of the piston chamber with the first flow channel and the second flow channel are controlled by one pilot valve port, which can be easily controlled and simplifies the structure.

Preferably, the main valve body includes an upper valve body and a lower valve body; the first flow channel includes a first upper flow channel internally arranged in the upper valve body and a first lower flow channel internally arranged in the lower valve body, and the first upper flow channel and the first lower flow channel are in communication with each other; the second flow channel includes a second upper flow channel internally arranged in the upper valve body and a second lower flow channel internally arranged in the lower valve body, and the second upper flow channel and the second lower flow channel are in communication with each other; and the pilot valve flow channel is internally arranged in the upper valve body.

The main valve body may be embodied as the upper valve body and the lower valve body which are separately formed, to facilitate assembling the piston and the spring in the piston chamber and other components. Besides, the separated structure facilitates machining the required first flow channel and second flow channel inside the main valve body.

Preferably, the first connecting port is arranged on a side wall of the lower valve body, and the second connecting port is arranged in an end portion of the lower valve body; the first lower flow channel is arranged in a longitudinal direction; the second lower flow channel includes a longitudinal lower flow channel arranged in the longitudinal direction, and a transition lower flow channel configured to allow the longitudinal lower flow channel to be in communication with the second connecting port.

Due to such designs of the first connecting port and the second connecting port, connection and disconnection can be easily controlled by the piston. The first flow channel is arranged along the longitudinal direction, thus the travel of the refrigerant along the first flow channel is the shortest, which improves the response speed, and the first flow channel may be directly formed by stamping, which facilitates machining. Advantages of the second flow channel being arranged in longitudinal direction can also have the same effect.

Preferably, the first flow channel and the second flow channel are located at the same axial section.

Due to such design, the first flow channel and the second flow channel are arranged at two opposite sides of the main valve body, thereby making the structure of the main valve body approximately symmetric and improving the stability.

Preferably, the first upper flow channel and the second upper flow channel each includes a transverse upper flow channel and a longitudinal upper flow channel which are in communication with each other.

When the refrigerant enters via the longitudinal flow channel, the transverse upper flow channels arranged perpendicularly to the longitudinal flow channel have relatively large flow resistance, and at the moment when the pilot valve body opens the valve, the pressure at an outlet of the longitudinal flow channel changes little, namely pressure differences between two ends of a blocking member of the pilot valve port before the valve is opened and after the valve is opened are small, and the resistance for opening the blocking member is small, thereby facilitating opening the valve.

Preferably, the transverse upper flow channels of the first upper flow channel and the second upper flow channel are on the same cross section.

Thus, the transverse upper flow channels of the two flow channels may be machined more conveniently, and the distribution of the flow channels on the upper valve body is more symmetric, which facilitates improving the stability of the upper valve body.

Preferably, the first upper flow channel and the second upper flow channel have the same longitudinal upper flow channel.

Having the same longitudinal upper flow channel facilitates machining, and also facilitates controlling the connection and disconnection of the two flow channels with the same pilot valve port, and this structure is easier to be machined.

Preferably, an inflow channel allowing the refrigerant to flow into the piston chamber is arranged on the piston.

When the inflow channel is designed on the piston, the refrigerant may flow rapidly to the piston chamber, thus improving the response speed of the opening and closing of the solenoid valve.

When the first connecting port and the second connecting port are respectively arranged on the side wall and the end portion of the valve body, the positions of the inflow channels of this design are corresponding to the positions of the two connecting ports, thus the refrigerant can easily flow into the piston chamber.

Preferably, the upper valve body is provided with a downward stepped surface, and the lower valve body is provided with an upward stepped surface configured to cooperate with the downward stepped surface; and the upper valve body and the lower valve body are each provided with bolts holes, and are configured to be fixed together by bolts inserted into the bolts holes.

Cooperation of the stepped surfaces makes the combination between the upper valve body and the lower valve body more compact, and with the bolts, the assembly of the upper valve body and the lower valve body is more reliable.

Preferably, the lower valve body has a cylindrical structure, and the upper valve body is of an end cap shape and is configured to be tightly fit into an end portion of the lower valve body.

The upper valve body of the end cap shape occupies a small volume, which only needs to have a volume for arranging two upper flow channels, thus is easy to install. In addition, the piston chamber is mainly formed by the lower valve body, which facilitates realizing an effective assembly of the piston. The sealing performance between the piston and a valve wall may be guaranteed.

Preferably, the linear two-way solenoid valve is provided with a pilot valve chamber, and the piston chamber is configured to be in communication with the pilot valve chamber via the pilot valve flow channel; and in the case that the pilot valve port is opened, the first flow channel and the second flow channel are in communication with the piston chamber via the pilot valve chamber.

By arranging the pilot valve chamber, connection relationships between the pilot valve flow channel, the first flow channel, the second flow channel and the pilot valve port are easier to realize, thereby facilitates practical machining.

Preferably, a movable iron core installed inside the pilot valve body is the pilot valve head.

The movable iron core functioning as the pilot valve head makes the whole pilot valve body have a very simple structure and occupy a small volume.

Preferably, the pilot valve flow channel is arranged in a longitudinal direction.

With such design, a connecting travel between the pilot valve flow channel and the piston chamber is the shortest, and when the valve is opened, the high pressure refrigerant entering into the piston chamber may rapidly enter into the pilot valve chamber, and further enters into the first flow channel or the second flow channel, thereby improving the response speed of the solenoid valve.

Preferably, an end portion, facing the pilot valve body, of the upper valve body is provided with a groove, and the groove is configured to cooperate with the pilot valve body to form a pilot valve chamber to communicate with the piston chamber, and in the case that the pilot valve port is opened, the first upper flow channel and the second upper flow channel are in communication with the pilot valve chamber.

### BRIEF DESCRIPTION OF THE DRAWINGS

Figure 1 is a schematic view showing the structure of a typical two-way solenoid valve;
Figure 2 is a schematic view showing the structure of a pilot valve head and a movable iron core of the two-way solenoid valve in Figure 1;
Figure 3 is an axial sectional view of a first embodiment of a linear two-way solenoid valve according to the present application;
Figure 4 is a partially enlarged schematic view showing a part C in Figure 3;
Figure 5 is a sectional view of Figure 3 taken along the line A-A;
Figure 6 is a schematic view showing the structure of an upper valve body in Figure 3;
Figure 7 is a schematic view showing the structure of the upper valve body in Figure 5;
Figure 8 a perspective view showing the structure of the upper valve body in Figure 3;
Figure 9 is an axial sectional view of a second embodiment of the linear two-way solenoid valve according to the present application; and
Figure 10 is a sectional view of Figure 9 taken along the line B-B.

| Reference Numerals in Figures 1 to 2: | | | |
|---|---|---|---|
| 1 | valve body, | 1b | valve port, |
| 20b | second connecting port, | 20a | first connecting port, |
| 30 | piston | 30b | inflow channel, |
| 30e | first check valve, | 30f | second check valve, |
| 30a | first check valve core, | 30c | second check valve core, |
| 30k | first piston flow channel, | 30d | second piston flow channel, |
| 30g | one-way valve, | 40 | movable iron core, |
| 50 | pilot valve head, | 60 | guide rod, |
| 70 | coil, | 90 | spring; |

| Reference Numerals in Figures 3 to 9: | | | |
|---|---|---|---|
| 1 | pilot valve body, | 11 | pilot valve head, |
| 111 | steel ball, | 11a | pilot valve chamber; |
| 12 | coil, | 13 | static iron core, |
| 14 | pilot valve spring, | 2 | main valve body, |
| 2a | first connecting port, | 2b | second connecting port, |
| 21 | upper valve body, | 2-1 | first flow channel, |
| 2-2 | second flow channel, | 21a | longitudinal upper flow channel, |
| 21c | first transverse upper flow channel, | 21b | second transverse upper flow channel, |
| 21d | pilot valve flow channel, | 211 | first sealing ring |
| 212 | second sealing ring, | 213 | third sealing ring, |
| 214 | bolt, | 216 | first one-way valve, |
| 215 | second one-way valve, | 217 | groove, |
| 22 | lower valve body, | 22c | first lower flow channel, |
| 22a | longitudinal lower flow channel, | 22b | transition lower flow channel, |
| 22d | second lower flow channel, | 3 | piston, |
| 3a | inlet balance hole, | 3b | inlet one-way valve, |
| 4 | piston chamber. | | |

### DETAILED DESCRIPTION

For those skilled in the art to better understand technical solutions of the present application, the present application is described in detail in conjunction with drawings and embodiments hereinafter.

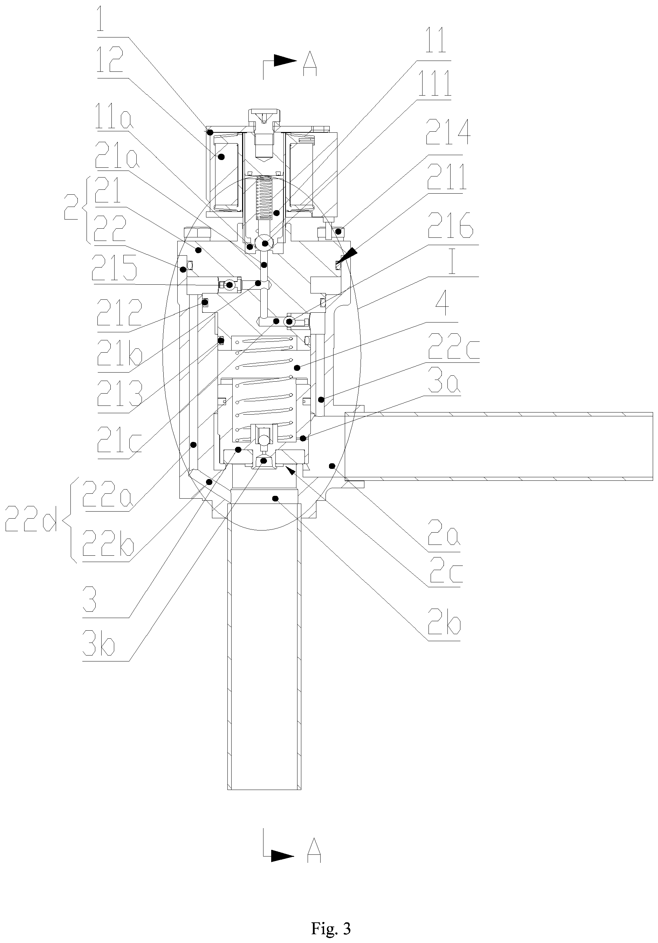

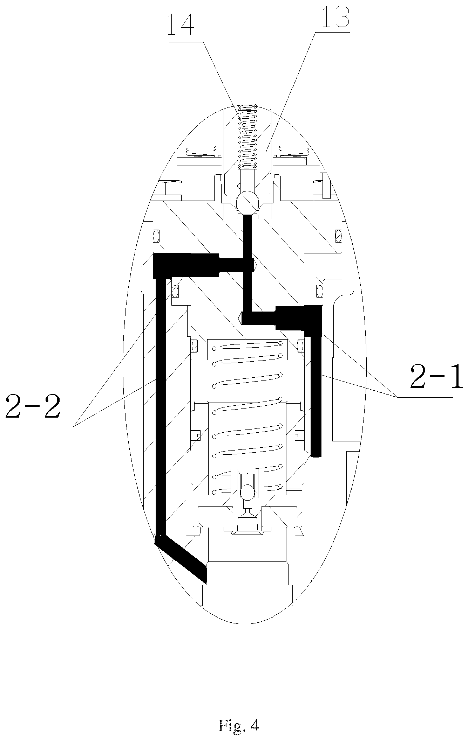

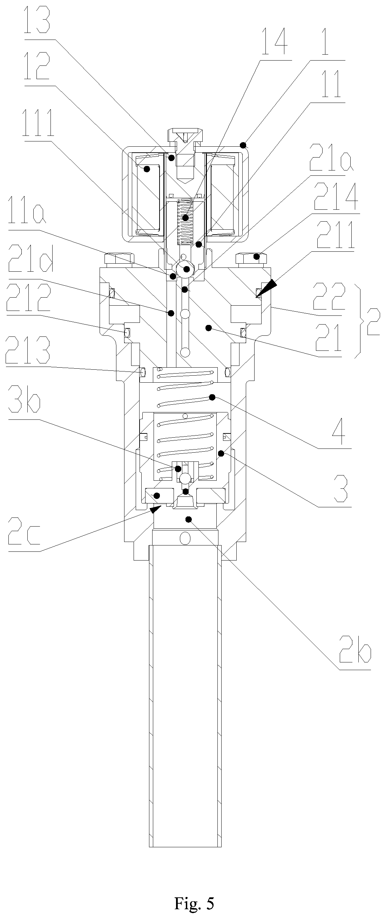

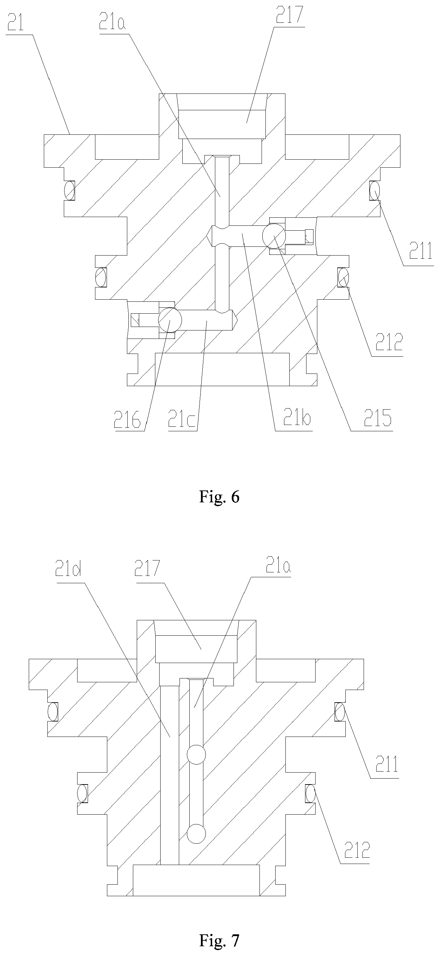

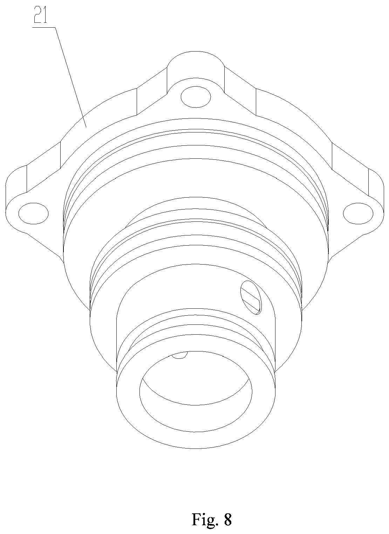

Reference is made to Figure 3 to Figure 8. Figure 3 is a an axial sectional view of a first embodiment of a linear two-way solenoid valve according to the present application; Figure 4 is a partially enlarged schematic view showing a part C in Figure 3; Figure 5 is a sectional view of Figure 3 taken along the line A-A; Figure 6 is a schematic view showing the structure of an upper valve body in Figure 3; Figure 7 is a schematic view showing the structure of the upper valve body in Figure 5; and Figure 8 a perspective view showing the structure of the upper valve body in Figure 3.

The linear two-way solenoid valve includes a main valve body 2 and a pilot valve body 11. A piston 3 is provided inside a valve chamber formed by the main valve body 2, to form a piston chamber 4. A first connecting port 2a and a second connecting port 2b are provided on the main valve body 2, the communication between the two connecting ports is controlled by the axial movement of the piston 3, and as shown in Figure 3, when the piston 3 moves upward, the first connecting port 2a is in direct communication with the second connecting port 2b. Similarly referring to Figure 3, the piston chamber 4 is a chamber above the piston 3, and when refrigerant is in the piston chamber 4, the piston 3 closes a valve port 2c under the action of high pressure; and a spring is further provided inside the piston chamber 4, and the reset force of the spring makes the piston 3 abut tightly against the valve port 2c of the two-way solenoid valve when no other external force is applied on the piston 3.

A coil 12, and a static iron core 13 and a movable iron core cooperating with each other are provided in the pilot valve body 1. The movable iron core in this embodiment is embodied as the pilot valve head 11. When the coil 12 is energized, the static iron core 13 and the pilot valve head 11 attract each other; and when the coil 12 is de-energized, the static iron core 13 and the pilot valve head 11 are separated from each other under the reset action of a pilot valve spring 14.

In order to realize a two-way connection and disconnection function, the solenoid valve is provided with a first flow channel 2-1 and a second flow channel 2-2 for allowing the refrigerant to flow out of the piston chamber 4. It may be appreciated that, in conjunction with Figure 4, the two flow channels in Figure 3 are shown in solid black in Figure 4 to be more obvious. Besides, an upper end of the first flow channel 2-1 and an upper end of the second flow channel 2-2 in this embodiment have a shared portion which will be described in details in the following contents.

When the pilot valve port is opened, the first flow channel 2-1 and the second flow channel 2-2 connect the piston chamber 4 with the first connecting port 2a and the second connecting port 2b respectively. It can be appreciated that, in conjunction with the background technology, when the solenoid valve is opened, the pilot valve head 11 moves under the action of magnetic force of the coil 12, to allow the piston chamber 4 to be in communication with the first connecting port 2a or the second connecting port 2b via the first flow channel 2-1 or the second flow channel 2-2, thereby forming a pressure difference between an upper side and a lower side of the piston 3 to open the valve port 2c. It may be appreciated that, when designing an inflow channel for the refrigerant, a sectional area of the inflow channel allowing the refrigerant to enter into the piston chamber 4 is required to satisfy the requirement of forming a pressure difference in cooperation with the first flow channel 2-1 and the second flow channel 2-2, which may be appreciated by reference to the background technology and the following embodiments.

In this embodiment, in the solenoid valve, the first flow channel 2-1 and the second flow channel 2-1 both configured to allow the refrigerant to flow out of the piston chamber 4 are both internally installed in the main valve body 2, that is, installed inside the entirety of the main valve body 2. Meanings of the "internally installed" in the present application are the same, and are referred to being installed inside the entirety of the main valve body 2. The main valve body 2 in Figure 3 is equivalent to a housing of the solenoid valve, and in this case, the first flow channel 2-1 and the second flow channel 2-2 are internally installed in the housing.

Moreover, a pilot valve flow channel 21d is internally provided in the main valve body 2, and the piston chamber 4 is in communication with a pilot valve chamber 11a of the two-way solenoid valve via the pilot valve flow channel 21d, that is, the pilot valve chamber 11a is remained in communication with the piston chamber 4. In this embodiment, the pilot valve chamber 11a is a cavity formed after the pilot valve body 1 and the main valve body 2 are assembled. The movement of the pilot valve head 11 can open and close the pilot valve port of the pilot valve chamber 11a, and as shown in Figure 3, when the coil 12 is energized, the pilot valve head 11 moves upward to open the pilot valve port; and when the coil 12 is de-energized, the pilot valve head 11 closes the pilot valve port. For ensuring the sealing performance of the closed pilot valve port, an end portion of the pilot valve head 11 may be a steel ball 111 as shown in the figure, and of course, the end portion of the pilot valve head 11 may also be designed to be cone-shaped or frustum-shaped.

When the pilot valve port is opened, the pilot valve chamber 11a is in communication with the first flow channel 2-1 and the second flow channel 2-2. When the pilot valve port is closed, the pilot valve chamber 11a is disconnected from the first flow channel 2-1 and the second flow channel 2-2. Since the pilot valve chamber 11a is in communication with the piston chamber 4, accordingly, the opening and closing of the pilot valve port also realize the connection and disconnection of the piston chamber 4 with the first flow channel 2-1 and the second flow channel 2-2.

In this embodiment, the first flow channel 2-1 and the second flow channel 2-2, which allow the piston valve 4 to be in communication with the first connecting port 2a and the second connecting port 2b when the solenoid valve is opened, are internally provided in the main valve body 2, and accordingly, the pilot valve head 11 only needs to cooperate with the main valve body 2, and no longer cooperates with the piston 3, thus the stroke of the piston 3 is separated from the travel of the pilot valve head 11. Therefore, the solenoid valve with this structure has the following technical advantages.

Firstly, when the solenoid valve has a demand for a large flow rate, the valve port 2c is enlarged, the stroke of the piston 3 is increased, while the travel of the movable iron core (the pilot valve head 11 in Figure 3 is the movable iron core) is not required to be increased, therefore the valve opening capacity of the valve is not affected, and the height of the solenoid valve is also not required to be increased. Based on this, the coil 12 is also not required to be enlarged, thereby overcoming the technical defects in the technical solutions in the background technology.

It may be appreciated that, since the pilot valve head 11 is separated from the piston 3, a chamber in Figure 1 is not required to be provided between the pilot valve head 11 and the movable iron core, and a spring 9 located inside the chamber is also not required, thus the pilot valve head 11 have a simple structure. Besides, as shown in Figure 3, the movable iron core cooperating with the coil 12 and the static iron core 13 may function as the pilot valve head 11, which makes the whole pilot valve body 1 have a very simple structure and a small volume. Of course, the movable iron core and the pilot valve head 11 may also be arranged separately.

Secondly, the pilot valve head 11 and the main valve body 2 cooperate with each other, and the main valve body 2 is a fixed component, which has a stable state, therefore during a two-way opening and closing process of the solenoid valve, a dislocation between the pilot valve head 11 and the main valve body 2 is not apt to occur, and compared with the background technology, the closing performance of the pilot valve port is not apt to be affected by the dislocation. Therefore, it is not required to provide a guiding part with a complicated structure on the main valve body 2 and the pilot valve head 11, and compared with the background technology, obviously in the present application, the structure is simplified, the machining difficulty and the assembly technology cost are reduced, and the control accuracy may satisfy the requirement.

Compared with the background technology, the pilot valve port is separated from the piston 3, and is internally provided in the main valve body 2. In order to ensure that the opening and closing of the pilot valve port can control the connection and disconnection of the piston chamber 4 with the first flow channel 2-1 and the second flow channel 2-2, the pilot valve flow channel 21d is provided, and the pilot valve chamber 11a is further provided, and the pilot valve chamber 11a functions as an intermediate channel between the piston chamber 4 and the two channels. In fact, instead of providing the pilot valve chamber 11a, it is also feasible to connect the pilot valve flow channel 21d and the two flow channels to the pilot valve port, however with the arrangement of the pilot valve chamber 11a, the connection relationships between the pilot valve flow channel 21d and the two flow channels with the pilot valve port are easier to be realized, which facilitates the practical machining.

According to the operating principle of the two-way solenoid valve, when the coil 12 is energized, the first flow channel 2-1 and the second flow channel 2-2 need to connect the piston chamber 4 with the first connecting port 2a and the second connecting port 2b. Based on this, various designs may be made to the first flow channel 2-1, the second flow channel 2-2, the two connecting ports, and the pilot valve port, and etc..

Reference is made to Figure 3 to Figure 5 again, in this embodiment, the first flow channel 2-1 connects the pilot valve port to the first connecting port 2a unidirectionally, and the second flow channel 2-2 connects the pilot valve port to the second connecting port 2b unidirectionally. As shown in the figures, a first one-way valve 216 is provided between the first flow channel 2-1 and the pilot valve port, and a second one-way valve 215 is provided between the second flow channel 2-2 and the pilot valve port, thus the refrigerant can only flow from the pilot valve port to the first flow channel 2-1 and the second flow channel 2-2.

At this moment, the inflow channel for the refrigerant may still be arranged on the piston 3; as shown in Figure 3, an inlet one-way valve 3b is arranged on the piston 3 to unidirectionally connect the second connecting port 2b to the piston chamber 4, and an inlet balance hole 3a is further provided on the piston 3 to connect the piston chamber 4 with the first connecting port 2a, and the positions of the inlet balance hole 3a and the inlet one-way valve 3b are corresponding to the positions of the first connecting port 2a and the second connecting port 2b respectively. In addition, as shown in Figure 3, a front end of the piston 3 may be provided with a stepped portion, and an annular groove is formed between the wall of the stepped portion and an inner wall of the main valve body 2, that is, forming a front valve chamber. The arrangement of the front valve chamber facilitates providing the inlet balance hole 3a, which allows the inlet balance hole 3a provided at any position on a periphery of the front end of the piston 3 to realize the communication between the piston chamber 4 and the first connecting port 3a.

The operating process of the linear two-way solenoid valve is described as follows.
a1. In the case that the refrigerant enters via the first connecting port 2a:
   when the coil 12 is de-energized:
      The pilot valve head 11 is at the position shown in Figure 3, that is, the steel ball 111 of the pilot valve head 11 blocks the pilot valve port, the pilot valve chamber 11a is disconnected from the two flow channels, and the high pressure refrigerant cannot enter into the second flow channel 2-2, that is, the piston chamber 4 is disconnected from the second connecting port 2b. The path of the refrigerant in this case is that, the refrigerant enters from the first connecting port 2a, flows through the inlet balance hole 3a, the piston chamber 4 and the pilot valve flow channel 21d, and flows into the pilot valve chamber 11a. Another path of the refrigerant is that, the refrigerant flows through the first flow channel 2-1 and then is blocked at the first one-way valve 216. The piston 3 cannot move under the action of the high pressure refrigerant in the piston chamber 4, the first connecting port 2a and the second connecting port 2b d are disconnected, and the solenoid valve is closed.
   When the coil 12 is energized:
      The pilot valve head 11 moves upward from the position shown in Figure 3 under the action of magnetic force, the steel ball 111 of the pilot valve head 11 is disengaged from the pilot valve port, thus the high pressure refrigerant may flow to the second flow channel 2-2, thereby opening the second one-way valve 215 to connect the piston chamber 4 with the second connecting port 2b. The path of the refrigerant path in this case is that, the refrigerant enters from the first connecting port 2a, flows through the inlet balance hole 3a, the piston chamber 4, the pilot valve flow channel 21d, the pilot valve chamber 11a and the second flow channel 2-2, and finally flows to the second connecting port 2b. In design, the sectional area of the inlet balance hole 3a is required to be smaller than the sectional area of the second flow channel 2-2, thus the volume of the refrigerant flowing into the piston chamber 4 is less than the volume of the refrigerant flowing out of the piston chamber 4, and a pressure difference is generated between an upper side and a lower side of the piston 3, the piston 3 moves upward, the valve port 2c of the solenoid valve is opened, the first connecting port 2a and the second connecting port 2b are in direct communication with each other, and the solenoid valve is opened.
b1. In the case that the refrigerant enters via the second connecting port 2b:
   When the coil 12 is de-energized:
      The pilot valve head 11 is at the position shown in Figure 3, and as described above, the pilot valve chamber 11a is disconnected from the two flow channels, the high pressure refrigerant cannot enter into the first flow channel 2-1, that is the piston chamber 4 is disconnected from the first connecting port 2a. In fact, a certain flow rate still exists between the piston chamber 4 and the first connecting port 2a, which is a certain quantity of refrigerant flowing to the first connecting port 2a via the inlet balance hole 3a. The path of the refrigerant in this case is that, the refrigerant enters from the second connecting port 2b, flows through the inlet one-way valve 3b and the piston chamber 4, and then flows into the pilot valve chamber 11a. Another path of the refrigerant is that, the refrigerant enters from the second connecting port 2b, flows into the second flow channel 2-2, and then is blocked at the second one-way valve 215. The piston 3 cannot move under the action of the high pressure refrigerant in the piston chamber 4, the first connecting port 2a and the second connecting port 2b are disconnected, and the solenoid valve is closed.
   When the coil 12 is energized:
      The pilot valve head 11 moves upward from the position shown in Figure 3 under the action of magnetic force, the steel ball 111 of the pilot valve head 11 is disengaged from the pilot valve port, the high pressure refrigerant entering into the pilot valve chamber 11a may flow to the first flow channel 2-1 via the pilot valve port, thereby opening the first one-way valve 216, to connect the piston chamber 4 with the first connecting port 2a. The path of the refrigerant in this case is that, the refrigerant enters from the second connecting port 2b, flows through the piston chamber 4, the pilot valve flow channel 21d, the pilot valve chamber 11a, and the first flow channel 2-1, and then flows to the first connecting port 2a. In design, the sectional area of the inlet one-way valve 3b is required to be smaller than the sectional area of the first flow channel 2-1, thus the volume of the refrigerant flowing into the piston chamber 4 is less than the volume of the refrigerant flowing out of the piston chamber 4, a pressure difference is generated between the upper side and the lower side of the piston 3, the piston 3 moves upward, the valve port 2c of the solenoid valve is opened, the first connecting port 2a and the second connecting port 2b are in direct communication with each other, and the solenoid valve is opened.

In the above embodiments, a one-way valve for unidirectionally connecting the first connecting port 2a with the piston chamber 4 may be arranged in the inlet balance hole 3a, thus when entering from the second connecting port 2b, the refrigerant cannot flow to the first connecting port 2a through the inlet balance hole 3a. Of course, in practical application, in view of the specifications of the existing two-way solenoid valves, the inlet balance hole 3a with a very small diameter may still meet the usage requirements, for example, having a diameter about 0.5mm, and in this case, the flow area is relatively small, and when the refrigerant enters from the second connecting port 2b, the refrigerant flowing directly to the first connecting port 2a via the inlet balance hole 3a can be neglected and will not affect the opening and closing performance of the solenoid valve, and at this time, the one-way valve may not be arranged in the inlet balance hole 3a.

In the above description, the inlet balance hole 3a and the inlet one-way valve 3b both functioning as the inflow channels are designed on the piston 3, and it should be noted that, the inflow channels may also be arranged on the main valve body 2. The inflow channels may be separately arranged on the main valve body 2, and may also be designed in the same channel as the outflow channel of the refrigerant. For example, the second flow channel 2-2 is designed with a branch flow channel leading to the piston chamber 4, the branch flow channel may be directly internally arranged at an upper end of the main valve body 2, and an one-way valve configured to unidirectionally connect the second connecting port 2b with the piston chamber 4 is arranged in the branch flow channel. Similarly, instead of the inlet balance hole 3a, a branch flow channel is provided in the first flow channel 2-1 to be in communication with the piston chamber 4. All of these kinds of designs may realize the object of opening and closing the solenoid valve bidirectionally; of course, when the inflow channel is designed on the piston 3, the refrigerant may flow to the piston chamber 4 rapidly, thereby improving the response speed of opening and closing of the solenoid valve.

In the above embodiments, the main valve body 2 may specifically include an upper valve body 21 and a lower valve body 22, as shown in Figures 3 to 7. In this case, the first flow channel 2-1 may include a first upper flow channel internally arranged in the upper valve body 21 and a first lower flow channel 22c internally arranged in the lower valve body 22, and the first upper flow channel and the first lower flow channel are in communication with each other. The second flow channel 2-2 includes a second upper flow channel internally arranged in the upper valve body 21 and a second lower flow channel 22d internally arranged in the lower valve body 22, and the second upper flow channel and the second lower flow channel 22d are in communication with each other. The pilot valve head 11 is internally provided at an end, opposite to the valve port 2c, of the main valve body 2, and the pilot valve flow channel 21d may be internally arranged in the upper valve body 21. The main valve body 2 may be embodied as the upper valve body 21 and the lower valve body 22 which are separately formed, to facilitate assembling the piston 3 and the spring in the piston chamber 4 and other components. Besides, the separated structure facilitates machining the required first flow channel 2-1 and second flow channel 2-2. Of course, the main valve body 2 may also be formed integrally, one end of which is connected to the pilot valve head 11, and the other end thereof is used to assemble internal components, and simplifications of machining and assembling technology of the integral structure are inferior to that of the separated structure.

In the case that the upper valve body 21 and the lower valve body 22 are separately formed, the first connecting port 2a of the main valve body 2 may be arranged on a side wall of the lower valve body 22, and the second connecting port 2b is arranged on an end portion of the lower valve body 22. Correspondingly, the pilot valve head 11 is connected to the other end of the lower valve body 22. Such design of the first connecting port 2a and the second connecting port 2b facilitates controlling the opening and closing of the piston 3.

The first lower flow channel 22c may be arranged in the longitudinal direction, and the second lower flow channel 22d may include a longitudinal lower flow channel 22a arranged in the longitudinal direction, and a transition lower flow channel 22b configured to connect the longitudinal lower flow channel 22a with the second connecting port 2b, as shown in Figure 3, and the longitudinal direction is the direction in parallel with the axial direction of the main valve body 2. The first connecting port 2a is arranged on a side wall of the lower valve body 22, and when the first flow channel 2-1 is arranged along the longitudinal direction, the travel of the refrigerant along the first flow channel 2-1 is the shortest, thereby improving the response speed, and the first flow channel 2-1 may be directly formed by stamping, which facilitates machining. Advantages of the second flow channel 2-2 having the longitudinal lower flow channel 22a are same as that of the first flow channel 2-1. Since the second connecting port 2b is located at an end portion, the transition lower flow channel 22b is required to make the longitudinal lower flow channel 22a be in communication with the second connecting port 2b.

Further, the first flow channel 2-1 and the second flow channel 2-2 may be located at the same axial section, as shown in Figure 3. Due to such design, the first flow channel 2-1 and the second flow channel 2-2 are arranged at opposite sides of the main valve body 2, which makes the structure of the main valve body 2 be approximately symmetrical, and improves the stability.

In addition, the first upper flow channel and the second upper flow channel may each include a transverse upper flow channel and a longitudinal upper flow channel 21a which are in communication with each other, such as the first transverse upper flow channel 21c and the second transverse upper flow channel 21b shown in Figure 3, thereby facilitating machining, and facilitating controlling the connection and disconnection of the pilot valve chamber 11a with the first flow channel 2-1 and the second flow channel 2-2 at the same time by one pilot valve port. Besides, when entering via the longitudinal flow channel 21a, the refrigerant flows to the first transverse upper flow channel 21c or the second transverse upper flow channel 21b, and the transverse upper flow channels arranged perpendicularly to the longitudinal flow channel 21a have relatively large flow resistance, and at the moment when the pilot valve body 1 opens the valve, the pressure at an outlet of the longitudinal flow channel 21a changes little, namely pressure differences between two ends of the steel ball 111 before the valve is opened and after the valve is opened are small, and the resistance for opening the steel ball 111 is small, thereby facilitating opening the valve. Of course, the first upper flow channel and the second upper flow channel may also be arranged obliquely with respect to the axis of the main valve body 2.

On this basis, the first upper flow channel and the second upper flow channel may have the same longitudinal upper flow channel 21a, as shown in Figure 4, and the first one-way valve 216 and the second one-way valve 215 are respectively arranged in the first transverse upper flow channel 21c and the second transverse upper flow channel 21b. With such design, the one-way valves can be easily assembled in the upper valve body 21. Having the same longitudinal upper flow channel 21a facilitates machining, and also facilitates controlling the connection and disconnection of the two flow channels with the same pilot valve port. It should be appreciated that, the following solution is also feasible, the pilot valve chamber 11a is provided with two pilot valve ports, the two flow channels are separately connected to one respective pilot valve port, and the pilot valve head 11 are provided with two steel balls 111 or other blocking components to respectively block off the two pilot valve ports. In this case, the first flow channel 2-1 and the second flow channel 2-2 no longer have a common part (the longitudinal upper flow channel 21a). Obviously, the structure in this embodiment is further simplified and facilitates machining.

It can be understood that, the design in the above embodiment that, the first flow channel 2-1 and the second flow channel 2-2 respectively connect the pilot valve port to the first connecting port 2a and the second connecting port 2b unidirectionally, is to prevent the first flow channel 2-1 from being in direct communication with the second flow channel 2-2 in the case that the connection and disconnection of the pilot valve chamber 11a with the first flow channel 2-1 and the second flow channel 2-2 are controlled by the same pilot valve port, It may be appreciated that, for achieving this object, the two one-way valves may also be arranged in the two lower flow channels of the lower valve body 22. When the pilot valve chamber 11a has two pilot valve ports respectively corresponding to the first flow channel 2-1 and the second flow channel 2-2, the first flow channel 2-1 and the second flow channel 2-2 are not in communication with each other, and the first one-way valve 215 and the second one-way valve 216 may not be provided.

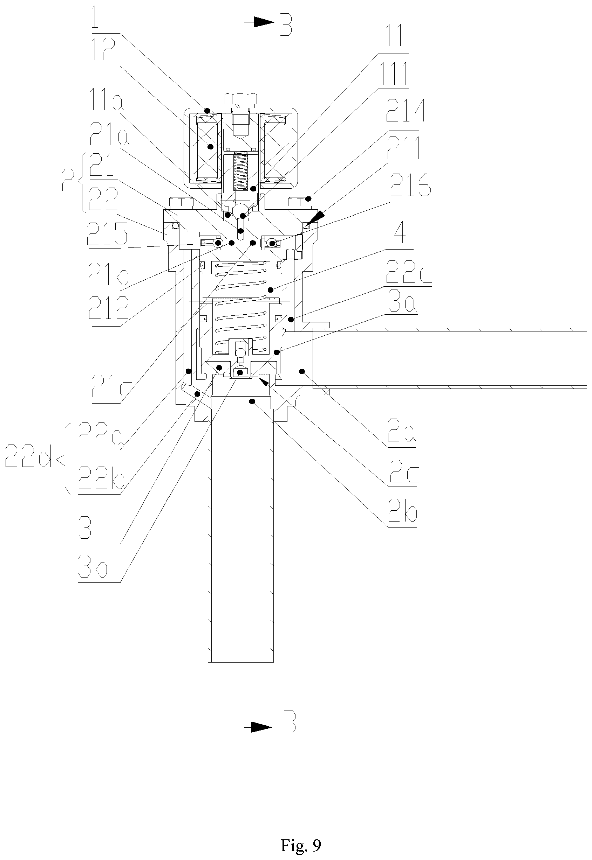

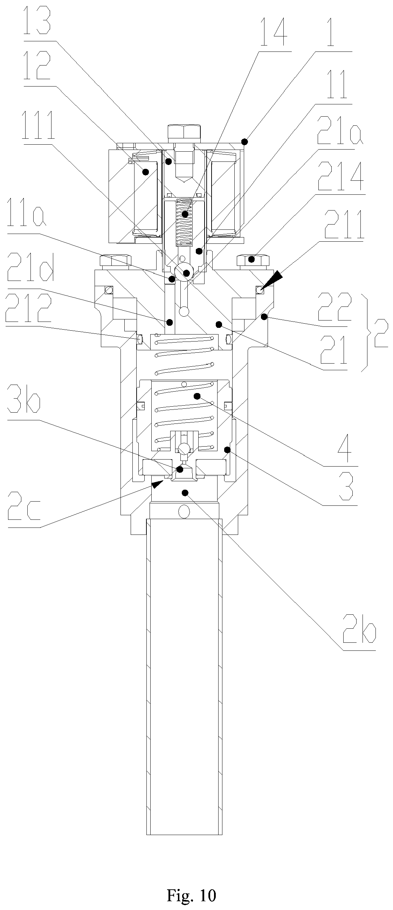

Reference is made to Figures 9 and 10, Figure 9 is an axial sectional view of a second embodiment of the linear two-way solenoid valve according to the present application; and Figure 10 is a sectional view of Figure 9 taken along the line B-B.

When the first upper flow channel and the second upper flow channel have the same longitudinal upper flow channel 21a, the transverse upper flow channels of the first upper flow channel and the second upper flow channel may also be in the same cross section, and as shown in Figure 9, the first transverse upper flow channel 21c and the second transverse upper flow channel 21b are in the same straight line. In this case, the transverse upper flow channels of the two upper flow channels are easier to machine, and moreover, the distribution of the flow channels on the upper valve body 21 is more symmetric, which facilitates improving the stability of the main valve body 2.

Besides, as shown in Figures 3 and 9, the pilot valve flow channel 21d may also be arranged in the longitudinal direction, and with such design, a connecting travel between the pilot valve flow channel 21d and the piston chamber 4 is the shortest, and when the valve is opened, the high pressure refrigerant entering into the piston chamber 4 may rapidly enter into the pilot valve chamber 11a, and further enters into the first flow channel 2-1 or the second flow channel 2-2, thereby improving the response speed of the solenoid valve.

The main valve body 2 with the separated structure may be specifically connected to a whole by the following way. The upper valve body 21 is provided with a downward stepped surface, and the lower valve body 22 is provided with an upward stepped surface configured to cooperate with the downward stepped surface. The upper valve body 21 and the lower valve body 22 are each provided with bolt holes, and are fixed to each other via bolts 214 inserted into the bolt holes. Cooperation of the stepped surfaces makes the combination between the upper valve body 21 and the lower valve body 22 more compact, and with the bolts 214, the assembly of the upper valve body 21 and the lower valve body 22 is more reliable. A sealing ring may also be installed on a contact surface of the upper valve body 21 and the lower valve body 22 to strengthen the sealing effect and avoid the leakage of the refrigerant. As shown in Figures 3, 5 and 6, the upper valve body 21 and the lower valve body 22 cooperate with each other through a three-stage stepped surface, and three steps of the three-stage stepped surface are respectively provided with a first sealing ring 211, a second sealing ring 212 and a third sealing ring 213.

When the main valve body is embodied as the separated structure, a groove 217 may be provided on an end portion, facing the pilot valve body 1, of the upper valve body 21, and the pilot valve port is also provided in the groove 217. After the pilot valve head 11 of the pilot valve body 1 is inserted into the groove 217, a pilot valve chamber 11a is formed, as shown in Figures 3, 6 and 7, thereby easily realizing the design of the pilot valve chamber 11a and the pilot valve port.

Specifically, the lower valve body 22 is of a cylindrical structure, and the upper valve body 21 is of an end cap shape, to fit tightly into an end portion of the lower valve body 22. As shown in Figure 3 to Figure 6, the upper valve body 21 of the end cap shape occupies a small volume, which only needs to have a volume for arranging two upper flow channels, thus is easy to install. In addition, the piston chamber 4 is mainly formed by the lower valve body 22, which facilitates realizing an effective assembly of the piston 3. The sealing performance between the piston 3 and a valve wall may be guaranteed.

A linear two-way solenoid valve according to the present application is described in detail hereinbefore. The principles and the embodiments of the present application are illustrated herein by specific examples. The above description of examples is only intended to help the understanding of the method and idea of the present application. It should be noted that, for the person skilled in the art, a few of improvements and modifications may be made to the present application without departing from the principle of the present application, and these improvements and modifications are also deemed to fall into the scope of the present application defined by the claims.

## Claims

1. A linear two-way solenoid valve, comprising a main valve body (2) and a pilot valve body (1), a coil, and a static iron core and a movable iron core cooperating with each other are provided in the pilot valve body; a piston (3) being provided in a valve chamber formed by the main valve body (2) to form a piston chamber (4), and the main valve body (2) being provided with a first connecting port (2a) and a second connecting port (2b), connection and disconnection between the first connecting port (2a) and the second connecting port (2b) being controlled by the piston (3); the linear two-way solenoid valve further comprising a first flow channel (2-1) and a second flow channel (2-2), which are respectively in communication with the first connecting port (2a) and the second connecting port (2b) to allow refrigerant to flow out, wherein,
the main valve body (2) is internally provided with a pilot valve flow channel (21d), and the piston chamber (4) is remained in communication with a pilot valve chamber formed between the pilot valve body and the main valve body via the pilot valve flow channel (21d); and
a pilot valve head (11) of the pilot valve body (1) is configured to move, to open or close a pilot valve port internally provided in the main valve body (2) to connect or disconnect the piston chamber (4) with the first flow channel (2-1) or the second flow channel (2-2)
wherein an inflow channel in communication with the second connecting port (2b) is arranged on an end portion of the piston (3); and an inlet one-way valve (3b) configured to unidirectionally connect the second connecting port (2b) with the piston chamber (4) is arranged in the inflow channel in communication with the second connecting port (2b), **characterized in that** the first flow channel (2-1) and the second flow channel (2-2) are both wholly internally arranged in the main valve body (2); and **in that** an inlet balance hole (3a) is further provided on a side wall of the piston (3) to connect the piston chamber (4) with the first connecting port (2a).

2. The linear two-way solenoid valve according to claim 1, wherein the number of the pilot valve port of the linear two-way solenoid valve is one; and one-way valves are provided respectively in the first flow channel (2-1) and the second flow channel (2-2) to respectively connect the pilot valve port to the first connecting port (2a) and connect the pilot valve port to the second connecting port (2b).

3. The linear two-way solenoid valve according to claim 1, wherein the main valve body (2) comprises an upper valve body (21) and a lower valve body (22); the first flow channel (2-1) comprises a first upper flow channel internally arranged in the upper valve body (21) and a first lower flow channel (22c) internally arranged in the lower valve body (22), and the first upper flow channel and the first lower flow channel (22c) are in communication with each other; the second flow channel (2-2) comprises a second upper flow channel internally arranged in the upper valve body (21) and a second lower flow channel (22d) internally arranged in the lower valve body (22), and the second upper flow channel and the second lower flow channel are in communication with each other; and the pilot valve flow channel (21d) is internally arranged in the upper valve body (21).

4. The linear two-way solenoid valve according to claim 3, wherein the first connecting port (2a) is arranged on a side wall of the lower valve body (22), and the second connecting port (2b) is arranged in an end portion of the lower valve body (22); the first lower flow channel (22c) is arranged in a longitudinal direction; the second lower flow channel (22d) comprises a longitudinal lower flow channel (22a) arranged in the longitudinal direction, and a transition lower flow channel (22b) configured to allow the longitudinal lower flow channel (22a) to be in communication with the second connecting port (2b).

5. The linear two-way solenoid valve according to claim 4, wherein the first flow channel (2-1) and the second flow channel (2-2) are located at the same axial section.

6. The linear two-way solenoid valve according to claim 5, wherein the first upper flow channel and the second upper flow channel each comprise a transverse upper flow channel and a longitudinal upper flow channel (21a) which are in communication with each other.

7. The linear two-way solenoid valve according to claim 6, wherein the transverse upper flow channels of the first upper flow channel and the second upper flow channel are on the same cross section.

8. The linear two-way solenoid valve according to claim 6, wherein the first upper flow channel and the second upper flow channel have the same longitudinal upper flow channel (21a).

9. The linear two-way solenoid valve according to claim 3, wherein the upper valve body (21) is provided with a downward stepped surface, and the lower valve body (22) is provided with an upward stepped surface configured to cooperate with the downward stepped surface; and the upper valve body (21) and the lower valve body (22) are each provided with bolts holes, and are configured to be fixed together by bolts (214) inserted into the bolts holes.

10. The linear two-way solenoid valve according to claim 9, wherein the lower valve body (22) has a cylindrical structure, and the upper valve body (21) is of an end cap shape and is configured to be tightly fit into an end portion of the lower valve body (22).

11. The linear two-way solenoid valve according to any one of claims 1 to 10, wherein the linear two-way solenoid valve is provided with a pilot valve chamber (11a), and the piston chamber (4) is configured to be in communication with the pilot valve chamber (11a) via the pilot valve flow channel (21d); and in the case that the pilot valve port is opened, the first flow channel (2-1) and the second flow channel (2-2) are in communication with the piston chamber (4) via the pilot valve chamber (11a).

12. The linear two-way solenoid valve according to any one of claims 1 to 10, wherein a movable iron core installed inside the pilot valve body (1) is the pilot valve head (11).

13. The linear two-way solenoid valve according to any one of claims 1 to 10, wherein the pilot valve flow channel (21d) is arranged in a longitudinal direction.

14. The linear two-way solenoid valve according to claim 3, wherein an end portion, facing the pilot valve body (1), of the upper valve body (21) is provided with a groove, and the groove is configured to cooperate with the pilot valve body (1) to form a pilot valve chamber (11a) to communicate with the piston chamber (4), and in the case that the pilot valve port is opened, the first upper flow channel and the second upper flow channel are in communication with the pilot valve chamber (11a).

## Patentansprüche

1. Lineares Zwei-Wege-Magnetventil, umfassend einen Hauptventilkörper (2) und einen Vorsteuerventilkörper (1), wobei eine Spule, ein statischer Eisenkern und ein beweglicher Eisenkern, die miteinander zusammenwirken, in dem Vorsteuerventilkörper vorgesehen sind; wobei ein Kolben (3) in einer Ventilkammer vorgesehen ist, die durch den Hauptventilkörper (2) gebildet wird, um eine Kolbenkammer (4) zu bilden, und wobei der Hauptventilkörper (2) mit einer ersten Verbindungsöffnung (2a) und einer zweiten Verbindungsöffnung (2b) versehen ist, wobei Verbindung und Trennung zwischen der ersten Verbindungsöffnung (2a) und der zweiten Verbindungsöffnung (2b) durch den Kolben (3) gesteuert werden; wobei das lineare Zwei-Wege-Magnetventil ferner einen ersten Strömungskanal (2-1) und einen zweiten Strömungskanal (2-2) umfasst, die mit der ersten Verbindungsöffnung (2a) bzw. der zweiten Verbindungsöffnung (2b) in Verbindung stehen, um zu ermöglichen, dass Kältemittel ausströmt, wobei
der Hauptventilkörper (2) innen mit einem Vorsteuerventilströmungskanal (21d) versehen ist und die Kolbenkammer (4) mit einer Vorsteuerventilkammer, die zwischen dem Vorsteuerventilkörper und dem Hauptventilkörper gebildet wird, über den Vorsteuerventilströmungskanal (21d) in Verbindung bleibt; und
ein Vorsteuerventilkopf (11) des Vorsteuerventilkörpers (1) dazu ausgebildet ist, sich zu bewegen, um eine Vorsteuerventilöffnung, die innen in dem Hauptventilkörper (2) vorgesehen ist, zu öffnen oder zu schließen, um die Kolbenkammer (4) mit dem ersten Strömungskanal (2-1) oder dem zweiten Strömungskanal (2-2) zu verbinden oder davon zu trennen,
wobei ein Einströmkanal in Verbindung mit der zweiten Verbindungsöffnung (2b) an einem Endabschnitt des Kolbens (3) angeordnet ist; und ein Ein-Weg-Einlassventil (3b), das dazu ausgebildet ist, die zweite Verbindungsöffnung (2b) mit der Kolbenkammer (4) unidirektional zu verbinden, in dem Einströmkanal in Verbindung mit der zweiten Verbindungsöffnung (2b) angeordnet ist, **dadurch gekennzeichnet, dass** der erste Strömungskanal (2-1) und der zweite Strömungskanal (2-2) beide zur Gänze innen in dem Hauptventilkörper (2) angeordnet sind; und dadurch, dass ein Einlassausgleichsloch (3a) ferner an einer Seitenwand des Kolbens (3) vorgesehen ist, um die Kolbenkammer (4) mit der ersten Verbindungsöffnung (2a) zu verbinden.

2. Lineares Zwei-Wege-Magnetventil nach Anspruch 1, wobei die Anzahl der Vorsteuerventilöffnungen des linearen Zwei-Wege-Magnetventils eins ist; und Ein-Weg-Ventile in dem ersten Strömungskanal (2-1) bzw. dem zweiten Strömungskanal (2-2) vorgesehen sind, um die Vorsteuerventilöffnung mit der ersten Verbindungsöffnung (2a) zu verbinden bzw. die Vorsteuerventilöffnung mit der zweiten Verbindungsöffnung (2b) zu verbinden.

3. Lineares Zwei-Wege-Magnetventil nach Anspruch 1, wobei der Hauptventilkörper (2) einen oberen Ventilkörper (21) und einen unteren Ventilkörper (22) umfasst; der erste Strömungskanal (2-1) einen ersten oberen Strömungskanal, der innen in dem oberen Ventilkörper (21) angeordnet ist, und einen ersten unteren Strömungskanal (22c), der innen in dem unteren Ventilkörper (22) angeordnet ist, umfasst und der erste obere Strömungskanal und der erste untere Strömungskanal (22c) miteinander in Verbindung sind; der zweite Strömungskanal (2-2) einen zweiten oberen Strömungskanal, der innen in dem oberen Ventilkörper (21) angeordnet ist, und einen zweiten unteren Strömungskanal (22d), der innen in dem unteren Ventilkörper (22) angeordnet ist, umfasst und der zweite obere Strömungskanal und der zweite untere Strömungskanal miteinander in Verbindung sind; und der Vorsteuerventilströmungskanal (21d) innen in dem oberen Ventilkörper (21) angeordnet ist.

4. Lineares Zwei-Wege-Magnetventil nach Anspruch 3, wobei die erste Verbindungsöffnung (2a) an einer Seitenwand des unteren Ventilkörpers (22) angeordnet ist und die zweite Verbindungsöffnung (2b) in einem Endabschnitt des unteren Ventilkörpers (22) angeordnet ist; der erste untere Strömungskanal (22c) in einer Längsrichtung angeordnet ist; der zweite untere Strömungskanal (22d) einen längs verlaufenden unteren Strömungskanal (22a), der in der Längsrichtung angeordnet ist, und einen unteren Übergangsströmungskanal (22b), der dazu ausgebildet ist, zu ermöglichen, dass der längs verlaufende untere Strömungskanal (22a) mit der zweiten Verbindungsöffnung (2b) in Verbindung ist, umfasst.

5. Lineares Zwei-Wege-Magnetventil nach Anspruch 4, wobei der erste Strömungskanal (2-1) und der zweite Strömungskanal (2-2) an demselben Axialschnitt angeordnet sind.

6. Lineares Zwei-Wege-Magnetventil nach Anspruch 5, wobei der erste obere Strömungskanal und der zweite obere Strömungskanal jeweils einen quer verlaufenden oberen Strömungskanal und einen längs verlaufenden oberen Strömungskanal (21a), die miteinander in Verbindung sind, umfassen.

7. Lineares Zwei-Wege-Magnetventil nach Anspruch 6, wobei die quer verlaufenden oberen Strömungskanäle des ersten oberen Strömungskanals und des zweiten oberen Strömungskanals auf demselben Querschnitt sind.

8. Lineares Zwei-Wege-Magnetventil nach Anspruch 6, wobei der erste obere Strömungskanal und der zweite obere Strömungskanal denselben längs verlaufenden oberen Strömungskanal (21a) aufweisen.

9. Lineares Zwei-Wege-Magnetventil nach Anspruch 3, wobei der obere Ventilkörper (21) mit einer nach unten abgestuften Oberfläche versehen ist und der untere Ventilkörper (22) mit einer nach oben abgestuften Oberfläche versehen ist, die dazu ausgebildet ist, mit der nach unten abgestuften Oberfläche zusammenzuwirken; und der obere Ventilkörper (21) und der untere Ventilkörper (22) jeweils mit Schraubenbohrungen versehen sind und dazu ausgebildet sind, durch Schrauben (214), die in die Schraubenbohrungen eingeführt werden, aneinander befestigt zu werden.

10. Lineares Zwei-Wege-Magnetventil nach Anspruch 9, wobei der untere Ventilkörper (22) eine zylindrische Struktur aufweist und der obere Ventilkörper (21) eine Endkappenform aufweist und dazu ausgebildet ist, fest in einen Endabschnitt des unteren Ventilkörpers (22) eingepasst zu werden.

11. Lineares Zwei-Wege-Magnetventil nach einem beliebigen der Ansprüche 1 bis 10, wobei das lineare Zwei-Wege-Magnetventil mit einer Vorsteuerventilkammer (11a) versehen ist und die Kolbenkammer (4) dazu ausgebildet ist, mit der Vorsteuerventilkammer (11a) über den Vorsteuerventilströmungskanal (21d) in Verbindung zu sein; und in dem Fall, dass die Vorsteuerventilöffnung geöffnet ist, der erste Strömungskanal (2-1) und der zweite Strömungskanal (2-2) mit der Kolbenkammer (4) über die Vorsteuerventilkammer (11a) in Verbindung sind.

12. Lineares Zwei-Wege-Magnetventil nach einem beliebigen der Ansprüche 1 bis 10, wobei ein beweglicher Eisenkern, der innerhalb des Vorsteuerventilkörpers (1) angebracht ist, der Vorsteuerventilkopf (11) ist.

13. Lineares Zwei-Wege-Magnetventil nach einem beliebigen der Ansprüche 1 bis 10, wobei der Vorsteuerventilströmungskanal (21d) in einer Längsrichtung angeordnet ist.

14. Lineares Zwei-Wege-Magnetventil nach Anspruch 3, wobei ein Endabschnitt des oberen Ventilkörpers (21), der dem Vorsteuerventilkörper (1) zugewandt ist, mit einer Nut versehen ist, und die Nut dazu ausgebildet ist, mit dem Vorsteuerventilkörper (1) zusammenzuwirken, um eine Vorsteuerventilkammer (11a) zu bilden, um mit der Kolbenkammer (4) zu kommunizieren, und in dem Fall, dass die Vorsteuerventilöffnung geöffnet ist, der erste obere Strömungskanal und der zweite obere Strömungskanal mit der Vorsteuerventilkammer (11a) in Verbindung sind.

## Revendications

1. Electrovanne linéaire à deux voies, comprenant un corps de vanne principal (2) et un corps de vanne pilote (1), une bobine et un noyau de fer statique et un noyau de fer mobile qui coopèrent l'un avec l'autre sont prévus dans le corps de vanne pilote; un piston (3) étant prévu dans une chambre de vanne formée par le corps de vanne principal (2) afin de former une chambre de piston (4), et le corps de vanne principal (2) étant pourvu d'un premier port de connexion (2a) et d'un second port de connexion (2b), la connexion et la déconnexion entre le premier port de connexion (2a) et le second port de connexion (2b) étant commandées par le piston (3); l'électrovanne linéaire à deux voies comprenant en outre un premier canal d'écoulement (2-1) et un second canal d'écoulement (2-2), qui sont respectivement en communication avec le premier port de connexion (2a) et le second port de connexion (2b) afin de permettre l'évacuation d'un réfrigérant,
dans laquelle le corps de vanne principal (2) est pourvu intérieurement d'un canal d'écoulement de vanne pilote (21d), et la chambre de piston (4) reste en communication avec une chambre de vanne pilote formée entre le corps de vanne pilote et le corps de vanne principal par l'intermédiaire du canal d'écoulement de vanne pilote (21d); et
une tête de vanne pilote (11) du corps de vanne pilote (1) est configuré de manière à se déplacer pour ouvrir ou fermer le port de vanne pilote prévu intérieurement dans le corps de vanne principal (2) afin de connecter ou de déconnecter la chambre de piston (4) au/du premier canal d'écoulement (2-1) ou au/du second canal d'écoulement (2-2);
dans laquelle un canal d'entrée en communication avec le second port de connexion (2b) est agencé sur une partie d'extrémité du piston (3); et une vanne d'entrée à une voie (3b) configurée de manière à connecter de façon unidirectionnelle le second port de connexion (2b) à la chambre de piston (4) est agencée dans le canal d'entrée en communication avec le second port de connexion (2b), **caractérisée en ce que** le premier canal d'écoulement (2-1) et le second canal d'écoulement (2-2) sont tous les deux entièrement agencés intérieurement dans le corps de vanne principal (2); et **en ce qu'**un trou d'équilibrage d'entrée (3a) est en outre prévu sur une paroi latérale du piston (3) afin de connecter la chambre de piston (4) au premier port de connexion (2a).

2. Electrovanne linéaire à deux voies selon la revendication 1, dans laquelle le nombre de ports de vanne pilote de l'électrovanne linéaire à deux voies est un; et des vannes à une voie sont prévues respectivement dans le premier canal d'écoulement (2-1) et le second canal d'écoulement (2-2) afin de connecter respectivement le port de vanne pilote au premier port de connexion (2a) et de connecter le port de vanne pilote au second port de connexion (2b).

3. Electrovanne linéaire à deux voies selon la revendication 1, dans laquelle le corps de vanne principal (2) comprend un corps de vanne supérieur (21) et en corps de vanne inférieur (22); le premier canal d'écoulement (2-1) comprend un premier canal d'écoulement supérieur agencé intérieurement dans le corps de vanne supérieur (21) et un premier canal d'écoulement inférieur (22c) agencé intérieurement dans le corps de vanne inférieur (22), et le premier canal d'écoulement supérieur et le premier canal d'écoulement inférieur (22c) sont en communication l'un avec l'autre; le second canal d'écoulement (2-2) comprend un second canal d'écoulement supérieur agencé intérieurement dans le corps de vanne supérieur (21) et un second canal d'écoulement inférieur (22d) agencé intérieurement dans le corps de vanne inférieur (22), et le second canal d'écoulement supérieur et le second canal d'écoulement inférieur sont en communication l'un avec l'autre; et le canal d'écoulement de vanne pilote (21d) est agencé intérieurement dans le corps de vanne supérieur (21).

4. Electrovanne linéaire à deux voies selon la revendication 3, dans laquelle le premier port de connexion (2a) est agencé sur une paroi latérale du corps de vanne inférieur (22), et le second port de connexion (2b) est agencé dans une partie d'extrémité du corps de vanne inférieur (22); le premier canal d'écoulement inférieur (22c) est agencé dans une direction longitudinale; le second canal d'écoulement inférieur (22d) comprend un canal d'écoulement inférieur longitudinal (22a) agencé dans la direction longitudinale, et un canal d'écoulement inférieur de transition (22b) configuré de manière à permettre à l'écoulement inférieur longitudinal (22a) d'être en communication avec le second port de connexion (2b).

5. Electrovanne linéaire à deux voies selon la revendication 4, dans laquelle le premier canal d'écoulement (2-1) et le second canal d'écoulement (2-2) sont situés au niveau de la même section axiale.

6. Electrovanne linéaire à deux voies selon la revendication 5, dans laquelle le premier canal d'écoulement supérieur et le second canal d'écoulement supérieur comprennent chacun un canal d'écoulement supérieur transversal et un canal d'écoulement supérieur longitudinal (21a) qui sont en communication l'un avec l'autre.

7. Electrovanne linéaire à deux voies selon la revendication 6, dans laquelle les canaux d'écoulement supérieurs transversaux du premier canal d'écoulement supérieur et du second canal d'écoulement supérieur se trouvent sur la même section transversale.

8. Electrovanne linéaire à deux voies selon la revendication 6, dans laquelle le premier canal d'écoulement supérieur et le second canal d'écoulement supérieur présentent le même canal d'écoulement supérieur longitudinal (21a).

9. Electrovanne linéaire à deux voies selon la revendication 3, dans laquelle le corps de vanne supérieur (21) est pourvu d'une surface étagée descendante, et le corps de vanne inférieur (22) est pourvu d'une surface étagée montante configurée de manière à coopérer avec la surface étagée descendante; et le corps de vanne supérieur (21) et le corps de vanne inférieur (22) sont chacun pourvus de trous de boulon, et sont configurés de manière à être fixés l'un à l'autre à l'aide de boulons (214) insérés dans les trous de boulon.

10. Electrovanne linéaire à deux voies selon la revendication 9, dans laquelle le corps de vanne inférieur (22) présente une structure cylindrique, et le corps de vanne supérieur (21) est en forme de coiffe d'extrémité et est configuré de manière à être agencé de façon étanche dans une partie d'extrémité du corps de vanne inférieur (22).

11. Electrovanne linéaire à deux voies selon l'une quelconque des revendications 1 à 10, dans laquelle l'électrovanne linéaire à deux voies est pourvue d'une chambre de vanne pilote (11a), et la chambre de piston (4) est configurée de manière à être en communication avec la chambre de vanne pilote (11a) par l'intermédiaire du canal d'écoulement de vanne pilote (21d); et dans le cas où le port de vanne pilote est ouvert, le premier canal d'écoulement (2-1) et le second canal d'écoulement (2-2) sont en communication avec la chambre de piston (4) par l'intermédiaire de la chambre de vanne pilote (11a).

12. Electrovanne linéaire à deux voies selon l'une quelconque des revendications 1 à 10, dans laquelle un noyau de fer mobile installé à l'intérieur du corps de vanne pilote (1) est la tête de vanne pilote (11).

13. Electrovanne linéaire à deux voies selon l'une quelconque des revendications 1 à 10, dans laquelle le canal d'écoulement de vanne pilote (21d) est agencé dans une direction longitudinale.

14. Electrovanne linéaire à deux voies selon la revendication 3, dans laquelle une partie d'extrémité, qui fait face au corps de vanne pilote (1) du corps de vanne supérieur (21) est pourvue d'une rainure, et la rainure est configurée de manière à coopérer avec le corps de vanne pilote (1) afin de former une chambre de vanne pilote (11a) pour communiquer avec la chambre de piston (4), et dans le cas où le port de vanne pilote est ouvert, le premier canal d'écoulement supérieur et le second canal d'écoulement supérieur sont en communication avec la chambre de vanne pilote (11a).
